# EUROPÄISCHE PATENTANMELDUNG

(11) **EP 1 819 182 A1**
(43) Veröffentlichungstag der Anmeldung: **15.08.2007**
(21) Anmeldenummer: 06002562.4
(22) Anmeldetag: 08.02.2006
(51) Int. Cl.: H04Q 7/38

(54) **Verfahren zur Steuerung eines Statuswechsels eines Endgerätes in einem Funk-Kommunikationssystem**

(71) Anmelder: SIEMENS AKTIENGESELLSCHAFT, 80333 München (DE)
(72) Erfinder: Unteregger, Burghard, 1040 Wien (AT); Wimmer, Markus, 50-316 Wroclaw (PL)

(57) **Zusammenfassung**

Gemäß einer Ausgestaltung der Erfindung wird von einer Funknetzsteuerung (RNC) eines Funk-Kommunikationssystems in einem Kanal eine Mehrzahl Informationsblöcke (MIB,SIB) periodisch ausgesendet, von der Funknetzsteuerung (RNC) eine Nachricht bezüglich eines Wechsels des Endgerätes (UE) von einem ersten Status (Cell_FACH) zu einem zweiten Status (Cell_DCH) zu dem Endgerät (UE) gesendet, und von dem Endgerät (UE) bei Bestätigung des erfolgten Wechsels von dem ersten Status (Cell_FACH) zu dem zweiten Status (Cell_DCH) mittels einer ersten Information der Funknetzsteuerung (RNC) signalisiert, dass die Mehrzahl Informationsblöcke (MIB,SIB) nicht vollständig gelesen wurde.

## Beschreibung

Die Erfindung betrifft ein Verfahren zur Steuerung eines Statuswechsels eines Endgerätes in einem Funk-Kommunikationssystem.

In Funk-Kommunikationssystemen der so genannten dritten Generation (3G), insbesondere dem UMTS (Universal Mobile Telecommunications System), welches durch die 3GPP (3rd Generation Partnership Project) standardisiert wird, sind verschiedene Protokollstati bzw. -modi, in denen sich ein Endgerät befinden kann, vorgesehen. Zwischen diesen Stati bzw. Modi kann, beispielsweise gesteuert durch das Netzwerk, gewechselt werden. Gemäß dem 3GPP-UMTS-Standard werden die einzelnen Stati bzw. Modi sowie die Übergänge zwischen ihnen in der technischen Spezifikation TS 25.331, V6.8.0, (2005-12), "Radio Resource Control; Protocol Specification", in beispielsweise dem Kapitel 7 beschrieben.

Neben dem so genannten Idle Mode, bei dem sich das Endgerät in einem Ruhezustand befindet und keine aktive Kommunikation mit dem Netzwerk betreibt, existieren verschiedene Ausprägungen des so genannten Verbindungsmodus (engl. Connected Mode) des Endgerätes. Bekannte Stati des Verbindungsmodus des UMTS-Standards sind beispielsweise der so genannte Cell_DCH- (DCH: Dedicated Channel), beschrieben in Kapitel 7.2.2.3 der TS 25.331, sowie der Cell-FACH-Status (FACH: Forward Access Channel), beschrieben in Kapitel 7.2.2.2 der TS 25.331, zwischen denen, gesteuert durch eine Funknetzsteuerung (engl. RNC - Radio Network Controller) gewechselt werden kann. Dieser netzgesteuerte Wechsel ist auch unter dem Begriff Channel Type Switching bekannt.

Die Möglichkeit des Endgerätes, einen Statuswechsel durchzuführen, kann dabei von einem vorherigen vollständigen Empfang bestimmter so genannter Systeminformationsblöcke (engl. SIB - System Information Block), welche von Basisstationen in Rundsendekanälen (engl. BCH - Broadcast Channel) ausgesendet werden, abhängig sein. Derartige Systeminformationsblöcke 1 bis 18 werden nach der TS 25.331 in den Kapiteln 8.1.1.1.1 sowie 8.1.1.6.1 bis 8.1.1.6.18, spezifiziert.

Insbesondere ist in dem Kapitel 8.1.1.1.2 der TS 25.331 angegeben, dass ein Endgerät (engl. UE - User Equipment) die Systeminformationsblöcke 11 und gegebenenfalls 12 lesen und auswerten muss, bevor das Endgerät so genannte Funkressourcenkontrollnachrichten (engl. RRC - Radio Resource Control message) in einem physikalischen zufallsgesteuerten Zugriffskanal PRACH (Physical Random Access Channel) in Aufwärtsrichtung zu einer Basisstation senden kann. Diese Systeminformationsblöcke 11 und 12 beinhalten insbesondere Informationen zu Nachbarfunkzellen, welche von dem Endgerät in Vorbereitung einer möglichen Verbindungsweiterschaltung (engl. Handover) bezüglich funktechnischer Eigenschaften beobachtet und daraus abgeleitete Informationen zu der aktuell das Endgerät versorgenden Basisstation signalisiert werden sollen.

Dies hat beispielsweise zur Konsequenz, dass das Endgerät bei einem Statuswechsel von Cell_DCH auf Cell_FACH ein vollständiges Systeminformationselement 11 (Kapitel 8.1.1.6.11, 10.2.48.8.14 der TS 25.331) sowie gegebenenfalls 12 (Kapitel 8.1.1.6.12, 10.2.48.8.15 der TS 25.331) lesen muss, bevor es eine so genannte Physical-Channel-Reconfiguration-Complete- oder Cell-Update-Nachricht als Funkressourcenkontrollnachricht in dem PRACH zu der Basisstation senden kann. Bei einer Länge beispielsweise des Systeminformationselementes 11 von bis zu 16 Segmenten mit jeweils bis zu 222 bits hätte dies eine Verzögerung von bis zu 320ms, zuzüglich bis zu vier Aussendungen von MIBs (Master Information Block) mit jeweils 20ms, sodass eine Gesamtverzögerung von bis zu 400ms bis zur Aussendung beispielsweise einer Cell-Update-Nachricht durch das Endgerät entstehen würde.

Zur Verkürzung dieser nachteiligen Verzögerung ist es denkbar, dass für einen Wechsel des Kanaltyps ein Lesen nur bestimmter Systeminformationsblöcke von dem Endgerät erforderlich ist, währenddessen andere Blöcke erst nach einer Signalisierung der Funkressourcenkontrollnachricht in dem Zugriffskanal PRACH von dem Endgerät gelesen werden. Hierzu sind beispielsweise der MIB sowie die Systeminformationsblöcke 1, 3, 4, 5 und 7 geeignet, die mit einer vergleichsweise hohen Periodizität auf dem Rundsendekanal übertragen werden können, wodurch eine maximale Gesamtverzögerung von ca. 100ms bis zur ersten Aussendung durch das Endgerät nach einem Wechsel des Kanaltyps erzielt werden kann. Die Systeminformationsblöcke 11 und ggf. 12 würden hingegen von dem Endgerät erst nach dieser ersten Aussendung in Aufwärtsrichtung gelesen werden.

Sofern jedoch sowohl in dem Endgerät als auch in der Funknetzsteuerung die Kenntnis, dass ein verzögertes Lesen der Systeminformationen 11 und ggf. 12 von dem jeweils anderen unterstützt wird, nicht konsistent vorhanden ist, kann nachteilig beispielsweise folgende Situation auftreten.

Es sei angenommen, dass kurze Zeit nach Aussenden einer Physical-Channel-Reconfiguration-Nachricht zu dem Endgerät die Funknetzsteuerung bestimmt, dass ein Wechsel des Endgerätes zurück in den Cell_DCH-Status umgehend erforderlich ist, beispielsweise aufgrund einer steigenden Übertragungslast in Abwärtsrichtung zu diesem Endgerät, Beschränkungen der Kapazität des FACH, Messberichts 4a des Endgerätes o.ä. In diesem Fall kann es zu dem geforderten weiteren Wechsel des Status in dem Endgerät und Aussenden der Physical-Channel-Reconfiguration-Complete-Nachricht vor einem Beenden des vollständigen Lesens der Systeminformationen 11 und ggf. 12 in Folge des ersten Statuswechsels kommen. In Ermangelung der Informationen der Systeminformationen 11 und ggf. 12 liegen dem Endgerät beispielsweise keine vollständigen Konfigurationsinformationen für durchzuführende Messungen von Nachbarfunkzellen vor, währenddessen die Funknetzsteuerung davon ausgeht, dass diese dem Endgerät bekannt sind. Als Folge ist das Endgerät beispielsweise nicht in der Lage, Informationen bzw. Messberichte (engl. measurement report) entsprechend den Vorgaben der Funknetzsteuerung zu liefern, wodurch eine Verbindungsübergabe des Endgerätes ggf. nicht bzw. nicht rechtzeitig durchgeführt werden kann und es folglich zu einem Verbindungsabbruch kommt.

In gleicher Weise erwartet beispielsweise die Funknetzsteuerung eine periodische Übertragung von Messberichten nach einem Wechsel des Endgerätes in den Cell_FACH-Status. Mittels des Informationselementes periodic reporting criteria in dem Systeminformationsblock 11 kann die Funknetzsteuerung beispielsweise definieren, mit welcher Periodizität - 250ms, 500ms, 1000ms etc. - das Endgerät Messberichte aussenden soll. Kommt es nun zu einem verzögerten Lesen des Systeminformationsblocks 11 und ggf. 12, so wird auch das Aussenden der Messberichte durch das Endgerät zumindest um die entsprechende Zeit verzögert. Eine Funknetzsteuerung, welche nicht in Kenntnis des verzögerten Lesens des Endgerätes ist und den umgehenden Beginn der Aussendungen durch das Engerät erwartet, könnte ein Ausbleiben der Messberichte als Fehlverhalten des Endgerätes interpretieren und die Verbindung auslösen.

Der Erfindung liegt die Aufgabe zugrunde, ein Verfahren sowie Komponenten eines Funk-Kommunikationssystems anzugeben, die einen beschleunigten Wechsel des Kanalstatus eines Endgerätes ermöglichen. Diese Aufgabe wird durch die Merkmale des Verfahrens, des Systems, der Funknetzsteuerung sowie des Endgerätes gelöst. Vorteilhafte Ausgestaltungen der Erfindung sind abhängigen Patentansprüchen zu entnehmen.

Die Erfindung wird nachfolgend anhand eines Ausführungsbeispiels näher dargestellt. Dabei zeigen
- FIG 1: ein Blockschaltbild eines Funk-Kommunikationssystems basierend auf dem UMTS-Standard,

- FIG 2: ein Ablaufdiagramm eines Statuswechsels nach dem Stand der Technik,
- FIG 3: ein Ablaufdiagramm eines Statuswechsels nach einer möglichen Ausgestaltung, und
- FIG 4: ein Ablaufdiagramm eines Statuswechsels nach dem erfindungsgemäßen Verfahren.

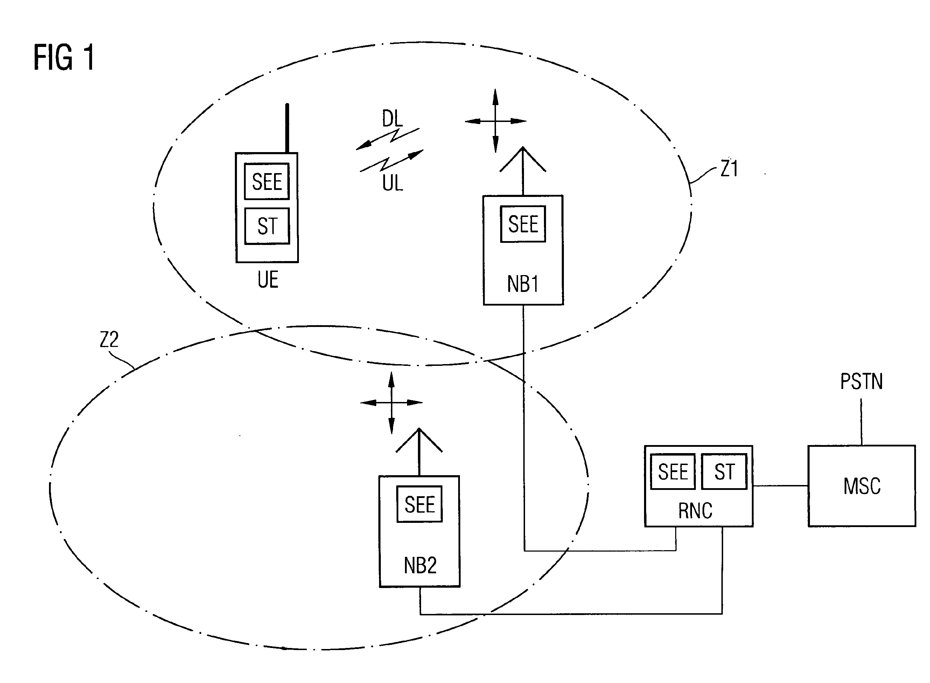

In der FIG 1 ist beispielhaft eine vereinfachte Struktur eines Funk-Kommunikationssystems nach dem bekannten UMTS- Standard dargestellt, wobei eine Realisierung des erfindungsgemä-ßen Verfahrens in Funk-Kommunikationssystemen nach anderen Standards in gleicher Weise möglich ist.

Die Struktur eines Funk-Kommunikationssystems nach dem UMTS-Standard besteht aus einer oder mehreren Mobilvermittlungsstelle MSC (Mobile Switching Center), welche eine Vermittlung von so genannten leitungsvermittelte Verbindungen (engl. Circuit Switched) sowie eine Verwaltung von verschiedenen Funktionalitäten des Systems durchführen. Die Mobilvermittlungsstelle MSC übernimmt zudem die Funktion des Übergangs zu dem öffentlichen Telefonnetz PSTN (Public Switched Telephone Network). Neben der Mobilvermittlungsstelle existieren nicht dargestellte so genannte Gateways, SGSN bzw. GGSN, welche einen Übergang in Netzwerke mit paketorientierter Übertragung, beispielsweise dem Internet, ermöglichen.

An die Mobilvermittlungsstelle MSC bzw. Gateways sind eine Vielzahl von Funknetzsteuerungen RNC (Radio Network Controller) angeschlossen, in denen unter anderem physikalische Ressourcen der Funkschnittstelle verwaltet werden. An eine Funknetzsteuerung RNC sind wiederum eine Vielzahl von Basisstationen NB1, NB2 (Node B) angeschlossen, welche unter Nutzung von zugewiesenen physikalischen Ressourcen der Funkschnittstelle Verbindungen zu Endgeräten UE (User Terminal) aufbauen und auslösen können. Jede Basisstation NB1, NB2 versorgt mit den zugeteilten physikalischen Ressourcen jeweils mindestens ein geographisches Gebiet, welches auch als Funkzelle Z1, Z2 bezeichnet wird. Die Übertragung auf der Funkschnittstelle erfolgt sowohl in Aufwärts- UL (Uplink) als auch in Abwärtsrichtung DL (Downlink). Sowohl die Basisstationen NB1, NB2 als auch Endgeräte UE weisen jeweils Sende/Empfangseinrichtungen SEE für die Signalübertragung auf der Funkschnittstelle auf. Weiterhin weist auch die Funknetzsteuerung eine Sende-/Empfangseinrichtung SEE für einen Austausch von Daten und Signalisierungen mit den Basisstationen sowie der Mobilvermittlungsstelle bzw. Gateways auf. Das Endgerät UE sowie die Funknetzsteuerung RNC weisen zudem jeweils eine Steuereinrichtung ST auf, mit der das erfindungsgemäße Verfahren, wie es nachfolgend beschrieben wird, durchgeführt werden kann.

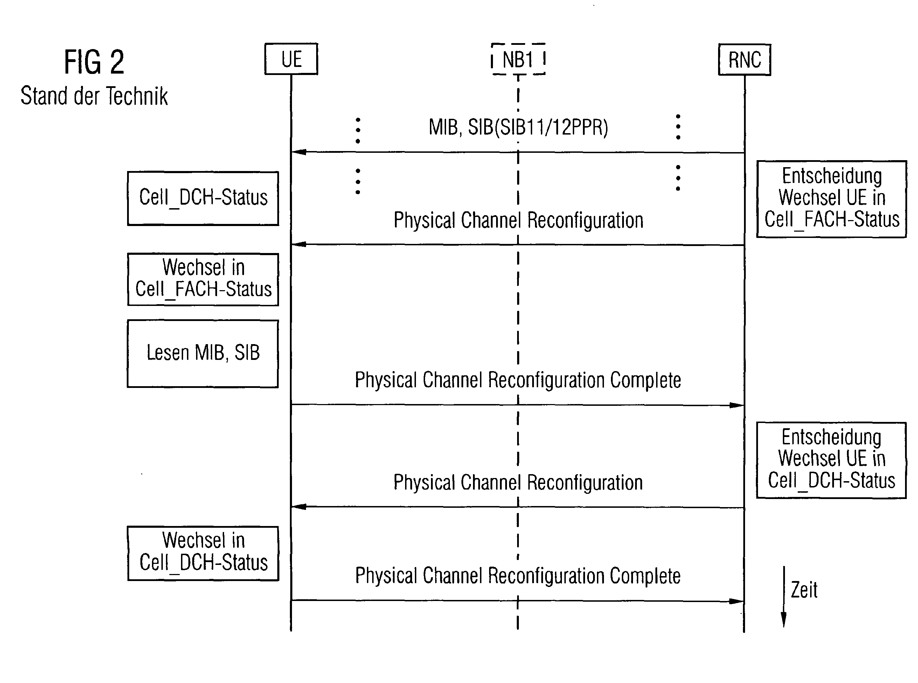

In der FIG 2 ist beispielhaft ein Verfahren nach dem einleitend beschriebenen Stand der Technik, wie es unter anderem der einleitend genannten TS 25.331 entnehmbar ist, in Form eines Ablaufdiagramms dargestellt. Da es sich hierbei um einen Austausch von Nachrichten auf höheren Schichten bzw. in logischen Kanälen handelt, ist die erste Basisstation NB1 bis auf die Übertragung der Nachrichten in den physikalischen Kanälen auf der Funkschnittstelle zu dem Endgerät UE nicht direkt in dem Nachrichtenfluss involviert und daher nur gestrichelt dargestellt.

Nach dem Beispiel der FIG 2 sendet die Funknetzsteuerung RNC periodisch in einem Rundsendekanal der ersten Basisstation NB1 sowohl Master Information Blöcke MIB als auch eine Anzahl von Systeminformationsblöcken SIB, wobei die einzelnen Systeminformationsblöcke mit ggf. unterschiedlichen Periodizitäten ausgesendet werden. Obwohl in der FIG 2 sowie nachfolgenden Figuren lediglich eine beispielhafte Übertragung dieser Informationen in dem Rundsendekanal dargestellt sind, ist es selbstverständlich, dass während des gesamten Zeitraumes des Ablaufdiagramms wiederholte Übertragungen dieser Informationen entsprechend ihrer jeweiligen Periodizität erfolgen.

Es sei angenommen, dass sich das Endgerät UE zunächst in dem so genannten Cell_DCH-Status befindet, in welchem es keine bzw. nur eine begrenzte Anzahl von Systeminformationsblöcken liest. Entscheidet nun die Funknetzsteuerung, beispielsweise aufgrund einer steigenden Übertragungslast in Abwärtsrichtung zu diesem Endgerät, Beschränkungen der Kapazität des FACH, oder Empfang des Messberichts 4a von dem Endgerät, dass das Endgerät UE in den so genannten Cell_FACH-Status wechseln soll, so sendet die Funknetzsteuerung RNC eine Rekonfigurationsnachricht Physical Channel Reconfiguration zu dem Endgerät, welche dieses veranlasst, einen Wechsel in den Cell_FACH-Status durchzuführen. Nach dem Kapitel 8.1.1.1.2 der TS 25.331 muss das Endgerät UE vor Aussendung einer Bestätigungsnachricht Physical Channel Reconfiguration Complete des Statuswechsels in einem zufallsgesteuerten Zugriffskanal zu der Funknetzsteuerung RNC sowohl den so genannten Master Information Block MIB als auch die betreffenden Systeminformationsblöcke SIB, einschließlich des vergleichsweise langen Systeminformationsblocks 11 und ggf. 12, vollständig gelesen haben, um entsprechend den darin angegebenen Konfigurationsinformationen zu arbeiten. Die bedeutet, wie einleitend dargestellt, dass diese Bestätigung unter Umständen erst mit einer Verzögerung von bis zu mehreren hundert Millisekunden übertragen wird.

Für einen nochmaligen Wechsel des Status des Endgerätes UE von Cell_FACH zu Cell_DCH erfolgt erneut eine Aussendung einer Rekonfigurationsnachricht Physical Channel Reconfiguration durch die Funknetzsteuerung RNC zu dem Endgerät UE, wodurch dieses in Folge den Status wechselt und wiederum eine entsprechende Bestätigungsnachricht Physical Channel Reconfiguration Complete zu der Funknetzsteuerung RNC in dem zufallsgesteuerten Zugriffskanal überträgt. Da das Endgerät in dem Cell_DCH-Status zumindest die vergleichsweise langen Systeminformationsblöcke 11 und ggf. 12 nicht liest, kommt es bei diesem Wechsel bzw. dessen Bestätigung nicht zu nachteiligen Verzögerungen.

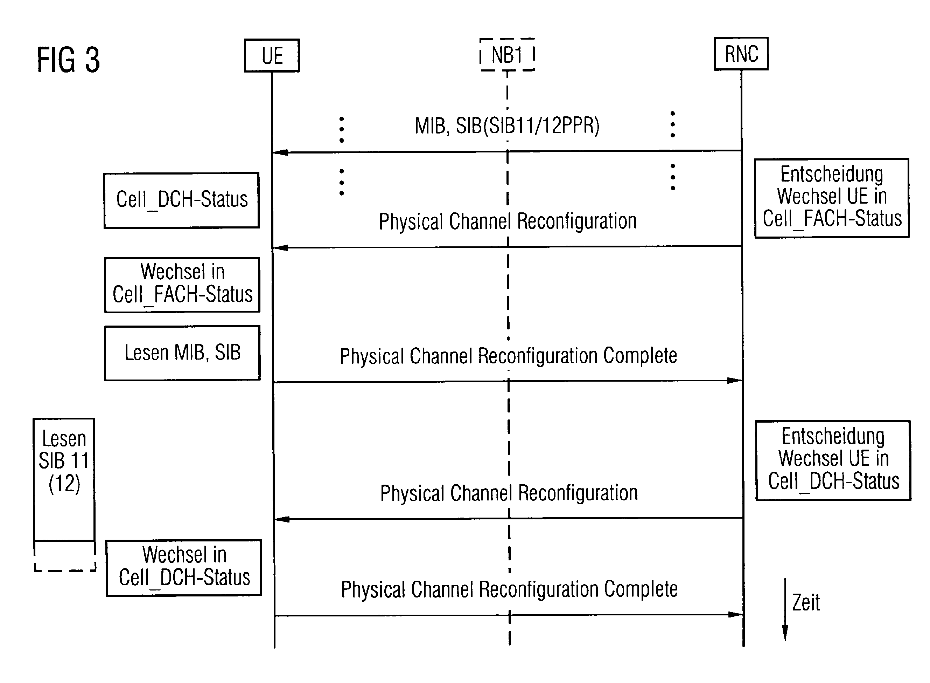

Ein zur Verkürzung nachteilig auftretender Verzögerungen beim Statuswechsel von Cell_DCH zu Cell_FACH denkbarer Ansatz, gemäß dem die Bestätigungsnachricht von dem Endgerät UE bereits vor einem vollständigen Lesen aller relevanten Systeminformationsblöcke, insbesondere dem Systeminformationsblock 11 und ggf. 12, zu der Funknetzsteuerung übertragen wird, ist in der FIG 3 beispielhaft dargestellt. Entsprechend dem Beispiel der FIG 2 befindet sich das Endgerät zunächst in dem Cell_DCH-Status, und die Funknetzsteuerung RNC entscheidet, dass das Endgerät UE in den Cell_FACH-Status wechseln soll. Die Funknetzsteuerung RNC sendet daraufhin eine Rekonfigurationsnachricht Physical Channel Reconfiguration in Abwärtsrichtung zu dem Endgerät UE. Dieses wechselt nach Empfang der Nachricht in den Cell_FACH-Status und sendet, beispielsweise bereits nach erfolgtem Lesen des MIB sowie den SIB 1, 3, 4, 5 und 7, die Bestätigungsnachricht Physical Channel Reconfiguration Complete zu der Funknetzsteuerung RNC. Wie beispielhaft in der FIG 3 dargestellt, setzt das Endgerät UE auch nach Aussenden der Bestätigungsnachricht den Empfang des Systeminformationsblocks 11 und ggf. 12 fort.

Entscheidet nun während des fortgesetzten Lesens des SIB 11 und ggf. 12 die Funknetzsteuerung RNC erneut, dass ein Statuswechsel des Endgerätes UE erfolgen soll, und veranlasst sie dies wiederum durch Senden einer Rekonfigurationsnachricht Physical Channel Reconfiguration, so wird das Endgerät UE diesen Statuswechsel ausführen und entsprechend der Funknetzsteuerung RNC bestätigen. Diesen Wechsel zurück in den Cell_DCH-Status führt das Endgerät UE auch aus, wenn es den SIB 11 und ggf. 12 noch nicht vollständig gelesen hat, so wie in der FIG 3 beispielhaft durch die den gestrichelt fortgesetzen Block dargestellt. In dem Cell_DCH-Status setzt das Endgerät UE jedoch das Lesen der SIB 11 und ggf. 12 bzw. weiterer SIB nicht fort, sodass es keine vollständigen Informationen hierzu vorliegen hat. Hierdurch kommt es zu den einleitend beschriebenen Inkonsistenzen zwischen den in dem Endgerät UE vorliegenden Informationen des SIB 11 und ggf. 12 und der Annahme der Funknetzsteuerung RNC, dass das Endgerät UE die Informationen des SIB 11 und ggf. 12 bereits vollständig empfangen hat, mit gegebenenfalls der Folge eines Verbindungsabbruchs aufgrund nicht erwarteten Verhaltens des Endgerätes UE.

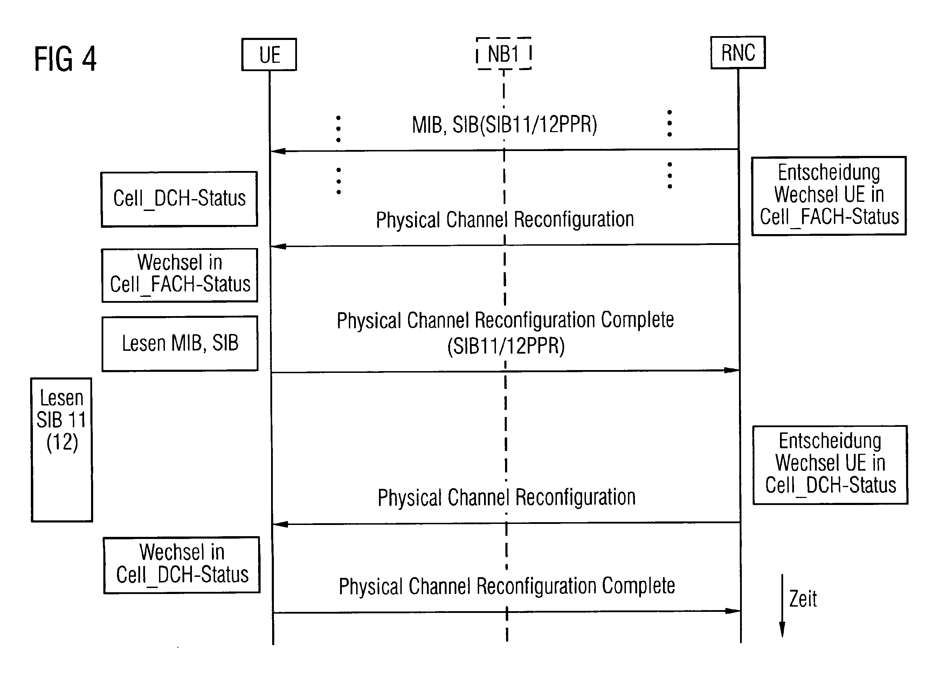

In der FIG 4 ist ein Ablaufdiagramm mit weiteren Merkmalen dargestellt. Ergänzend zu den bekannten Informationsblöcken MIB, SIB sowie ggf. weiteren Informationen wird erfindungsgemäß in dem Rundsendekanal eine Information darüber gesendet, dass ein oder mehrere Informationsblöcke, insbesondere die Systeminformationsblöcke 11 und ggf. 12, von Endgeräten verzögert gelesen werden können. Diese Information SIB11/12PPR (SIB 11 and/or 12 Postponed Reading) kann dabei als ein gesondertes Informationselement eines Systeminformationsblocks SIB, beispielsweise des mit einer vergleichsweise hohen Periodizität ausgesendeten SIB 5, des Master-Informationsblocks MIB oder auch als ein gesonderter Systeminformationsblock, gesendet werden. Insbesondere kann die Information dabei als ein Statusanzeiger (engl. flag) verwirklicht sein, d.h. durch Setzen eines speziellen Bits wird signalisiert, ob das Merkmal des verzögerten Lesens unterstützt wird oder nicht. Alternativ oder ergänzend hierzu ist gleichsam eine Übertragung dieser Informationen bzw. des Statusanzeigers als Ergänzung der Rekonfigurationsnachricht Physical Channel Reconfiguration denkbar, auch wenn dies nicht in der FIG 4 dargestellt ist.

Nach Empfang der Rekonfigurationsnachricht Physical Channel Reconfiguration wechselt das Endgerät UE von dem aktuellen Cell_DCH-Status in den Cell_FACH-Status und beginnt mit dem Lesen der Informationsblöcke MIB, SIB in dem Rundesendekanal der ersten Basisstation NB1. Mit diesen Informationsblöcken erhält das Endgerät UE auch die Kenntnis der Unterstützung der verzögerten Lesbarkeit bestimmter Systeminformationsblöcke, in dem Beispiel die Systeminformationsblöcke 11 und ggf. 12. Nach erfolgtem Lesen beispielsweise des MIB sowie der SIB 1, 3, 4, 5 sowie 7 sendet das Endgerät UE eine Bestätigungsnachricht Physical Channel Reconfiguration Complete zu der Funknetzsteuerung RNC. Die Funknetzsteuerung RNC ist im Gegensatz zu dem Beispiel der FIG 2 in Kenntnis der Tatsache, dass das Endgerät UE zum Zeitpunkt der Aussendung der Bestätigungsnachricht Physical Channel Reconfiguration Complete die Systeminformationsblöcke 11 und ggf. 12 noch nicht vollständig gelesen hat. Da sie zudem in Kenntnis der Länge sowie der Periodizität dieser Systeminformationsblöcke ist und somit den Zeitbedarf des Endgerätes UE zum Lesen dieser Informationen abschätzen kann, wird die Funknetzsteuerung RNC die Aussendung einer weiteren Rekonfigurationsnachricht Physical Channel Reconfiguration für einen Statuswechsel des Endgerätes UE von Cell_FACH zu Cell_DCH solange verzögern, bis die betreffenden Systeminformationsblöcke vollständig von dem Endgerät UE gelesen werden konnten.

Zusätzlich oder auch alternativ zu einer vorstehend beschriebenen Aussendung von Informationen bzw. eines Statusanzeigers bezüglich einer Unterstützung eines verzögerten Lesens bestimmter Informationsblöcke in dem Rundsendekanals durch die Funknetzsteuerung RNC kann in gleicher Weise eine Aussendung von entsprechenden Informationen durch das Endgerät erfolgen, wobei die Struktur sowie der Inhalt der Informationen nicht identisch zu den von der Funknetzsteuerung gesendeten Informationen sein müssen. Wie in der FIG 4 dargestellt, wird hierzu beispielsweise die Bestätigungsnachricht Physical Channel Reconfiguration Complete durch Informationen bzw. einen Statusanzeiger SIB11/12PPR ergänzt, mit denen das Endgerät UE der Funknetzsteuerung RNC mitteilt, dass es bestimmte Informationsblöcke, beispielsweise wiederum die Systeminformationsblöcke 11 und ggf. 12, verzögert liest. Diese ergänzenden Informationen bzw. Statusanzeiger können dabei bei jeder Aussendung einer Bestätigungsnachricht Physical Channel Reconfiguration Complete, einer so genannten RRC-Connection-Setup-Complete-Nachricht sowie beispielsweise auch einer so genannten Funkzellenaktualisierungsnachricht (engl. Cell Update), oder auch nur nach einem Wechsel in einen Status, beispielsweise den Cell_FACH-Status, in dem derartige Informationsblöcke gelesen werden müssen, von dem Endgerät UE zu der Funknetzsteuerung RNC gesendet werden.

Auch mittels dieser Information des Endgerätes UE ist die Funknetzsteuerung RNC in der Lage, eine erneute Rekonfiguration des Endgerätes UE zeitlich derart zu steuern, dass das Endgerät UE in jedem Fall in der Lage ist, die verzögert gelesenen Informationsblöcke vor einem Statuswechsel vollständig vollständig lesen und umsetzen zu können.

Sofern die Situation auftritt, dass die Funknetzsteuerung RNC das Endgerät UE vor einem Beenden des Lesens beispielsweise der Systeminformationsblöcke 11 und ggf. 12 mit der Rekonfigurationsnachricht Physical Channel Reconfiguration anweist, einen Wechsel in den Cell_DCH-Status durchzuführen, kann das Endgerät UE mittels einer Bestätigungsnachricht Physical Channel Reconfiguration Complete, ergänzt um die Informationen bzw. den Statusanzeiger, dass das Endgerät UE ein verzögertes Lesen bestimmter Systeminformationsblöcke durchführt, dem RNC signalisieren, dass es die gesamten Systeminformationen noch nicht vollständig gelesen und ggf. verarbeitet hat. Auf diese Situation kann die Funknetzsteuerung RNC beispielsweise derart reagieren, dass sie beispielsweise die vollständigen Messkonfigurationsinformationen, wie sie beispielsweise in den Systeminformationsblöcken 11 und ggf. 12 enthalten sind, mittels, ggf. erweiterter, Messsteuerungsnachrichten zu dem Endgerät UE überträgt.

Eine weitere beispielhafte Situation, in der eine erfindungsgemäße Signalisierung des verzögerten Lesens bestimmter Systeminformationsblöcke vorteilhaft einsetzbar ist, tritt auf, wenn die Funknetzsteuerung RNC nach einem Wechsel des Endgerätes UE in den Cell_FACH-Status eine so genannte Messsteuerungsnachricht (engl. Measurement Control) zu dem Endgerät UE sendet. In diesem Fall würde das Endgerät UE, sofern es die Systeminformationsblöcke nicht bereits vollständig gelesen hat, eine so genannte Messstörungsnachricht (engl. Measurement Failure) zu der Funknetzsteuerung RNC zurücksenden, einschließlich erfindungsgemäßer Informationen bzw. eines Statusanzeigers, welche der Funknetzsteuerung RNC ein verzögertes Lesen bestimmter Systeminformationsblöcke signalisieren.

Aus diesen Informationen bzw. dem Statusanzeiger kann die Funknetzsteuerung RNC ableiten, dass das Endgerät UE aufgrund des noch nicht erfolgten Beendens des Lesens der Systeminformationsblöcke noch nicht in der Lage ist, die Messsteuerungsnachricht umzusetzen, anstatt nach dem Stand der Technik von einer Fehlfunktion des Endgerätes UE auszugehen. Die Funknetzsteuerung RNC wird als Konsequenz aus der Signalisierung des Endgerätes UE beispielsweise die Messsteuerungsnachricht zu einem späteren Zeitpunkt erneut aussenden.

Ein weiterer Aspekt der Signalisierung durch das Endgerät UE kann darin liegen, dass das Endgerät UE hierdurch der Funknetzsteuerung RNC mitteilt, welche Systeminformationsblöcke bzw. Teile davon es bereits gelesen und/oder welche es nachfolgend noch lesen wird. Dies kann beispielsweise mittels einer Erweiterung des vorstehend genannten Statusanzeigers zu einem so genannten Bitmap erfolgen, mit dem spezifische Informationen signalisierbar sind. Dies kann einerseits vorteilhaft dazu dienen, dass der Funknetzsteuerung der aktuelle Status des Endgerätes bezüglich gespeicherter Messsteuerungsinformationen bekannt ist, andererseits sind derart spezifische Informationen sinnvoll, wenn beispielsweise ein Systeminformationsblock eine große Menge Informationen aufweist, das Endgerät jedoch nur einen Teil der Informationen lesen muss.

Die wachsende Anzahl unterschiedlicher Funk-Kommunikationssysteme bzw. Systemausprägungen führt beispielsweise dazu, dass insbesondere die Systeminformationsblöcke 11 und 12 eine immer größer werdende Menge Informationen zu Nachbarfunkzellen bzw. -systemen und deren Messsteuerungsinformationen enthalten müssen. Nach dem aktuellen Standard TS 25.331 können diese Systeminformationsblöcke beispielsweise Informationen von bis zu 96 Nachbarfunkzellen, aufgeteilt in 32 Intrafrequenz-, 32 Interfrequenz- und 32 Inter-Funkzugriffstechnologie- (RAT - Radio Access Technologie)-Funkzellen, beinhalten. Da jedoch selbst diese Mengen Informationen für eine große Anzahl parallel existierender Systeme und -ausprägungen nicht ausreichend sein werden, ist eine Erhöhung der Kapazität solcher Systeminformationsblöcke mittels einer Einführung von Erweiterungen sinnvoll. Dies kann sowohl in Form einer einzigen Erweiterung mit beispielsweise 16 Segmenten, als auch in Form einer Mehrzahl einzelner Erweiterungen mit einer jeweiligen Anzahl von Segmenten verwirklicht werden.

Eine Aufteilung der Segmente kann vorteilhaft beispielsweise nach Funkübertragungsstandards erfolgen, d.h. eine erste Erweiterung enthält Informationen zu Nachbarfunkzellen des GSM-Standards (Global System for Mobile Communication), währenddessen eine zweite Erweiterung Informationen zu Nachbarfunkzellen des UMTS-Standards und eine dritte Erweiterung Informationen zu Nachbarfunkzellen des IEEE 802.16 WiMAX-Standards (Worldwide Interoperability for Microwave Access) enthalten, etc. Eine Signalisierung, welche Erweiterungen beispielsweise des Systeminformationsblocks 11 und ggf. 12 existieren sowie einen Hinweis darauf, welche Art Informationen diese enthalten, kann mittels einer Erweiterung eines mit einer hohen Periodizität ausgesendeten Systeminformationsblocks, beispielsweise des SIB 5, verwirklicht werden. Die Erweiterungen können zudem beispielsweise mit einer zu dem bekannten Systeminformationsblock unterschiedlichen Periodizität ausgesendet werden, wobei auch die jeweilige Periodizität der Erweiterungen abhängig von bestimmten Parametern, beispielsweise der Fähigkeit, Verbindungsweiterschaltungen (engl. Handover) zu unterstützen, oder der unterstützten maximalen Geschwindigkeit von Endgeräten, dimensioniert werden kann.

Ein Endgerät, welches beispielsweise nur die Funkübertragungsstandards GSM und UMTS unterstützt, kann entsprechend von einem Lesen der Erweiterung mit Informationen zu Nachbarfunkzellen des WiMAX-Standards sowie ggf. weiteren existierenden Standards absehen. Mittels den vorstehend beschriebenen Informationen bzw. eines Bitmaps signalisiert das Endgerät folglich der Funknetzsteuerung, welche Erweiterungen bzw. Teile der Erweiterung es gelesen hat bzw. nachfolgend lesen wird, sodass die Funknetzsteuerung einerseits in Kenntnis der dem Endgerät verfügbaren Informationen sowie ihrer Fähigkeit der Unterstützung bestimmter Funkübertragungsstandards ist, andererseits auf Basis dieser Informationen abschätzen kann, welcher Zeitraum von dem Endgerät noch zum Lesen der Informationen noch benötigt wird.

Endgeräte, die die erfindungsgemäße Signalisierung des verzögerten Lesens bestimmter Systeminformationsblöcke nicht unterstützen, werden die diesbezüglichen Aussendungen der Funknetzsteuerungen ignorieren und entsprechend dem zu FIG 2 beschriebenen Stand der Technik weiterhin eine Bestätigungsnachricht erst nach vollständigem Lesen aller erforderlichen Systeminformationsblöcken zu der Funknetzsteuerung senden.

Die bezugnehmend auf FIG 1 beschriebenen Komponenten des Funk-Kommunikationssystems, insbesondere das Endgerät UE sowie die Funknetzsteuerung RNC als in dem erfindungsgemäßen Verfahren involvierte Komponenten, weisen jeweils zumindest eine Sende-/Empfangseinrichtung SEE auf, mittels denen vorstehend erläuterte Informationen, Nachrichten bzw. Statusanzeiger gesendet und empfangen werden können. Weiterhin sind in diesen Komponenten Steuereinrichtungen ST vorgesehen, die ein Einfügen der erfindungsgemäßen Informationen bzw. Statusanzeiger bezüglich eines verzögerten Lesens aller oder bestimmter Systeminformationen in bekannte Nachrichten bzw. Signalisierungen durchführen.

## Patentansprüche

1. Verfahren zur Steuerung eines Statuswechsels eines Endgerätes (UE) in einem Funk-Kommunikationssystem, bei dem
eine Funknetzsteuerung (RNC) des Funk-Kommunikationssystems in einem Kanal eine Mehrzahl Informationsblöcke (MIB,SIB) periodisch aussendet,
die Funknetzsteuerung (RNC) eine Nachricht bezüglich eines Wechsels des Endgerätes (UE) von einem ersten Status (Cell_FACH) zu einem zweiten Status (Cell_DCH) zu dem Endgerät (UE) sendet, und
das Endgerät (UE) bei Bestätigung des erfolgten Wechsels von dem ersten Status (Cell_FACH) zu dem zweiten Status (Cell_DCH) mittels einer ersten Information der Funknetzsteuerung (RNC) signalisiert, dass die Mehrzahl Informationsblöcke (MIB,SIB) nicht vollständig gelesen wurde.

2. Verfahren zur Steuerung eines Statuswechsels eines Endgerätes (UE) in einem Funk-Kommunikationssystem, bei dem
eine Funknetzsteuerung (RNC) des Funk-Kommunikationssystems in einem Kanal eine Mehrzahl Informationsblöcke (MIB,SIB) periodisch aussendet,
die Funknetzsteuerung (RNC) eine Nachricht bezüglich eines Wechsels des Endgerätes (UE) von einem ersten Status
(Cell_FACH) zu einem zweiten Status (Cell_DCH) zu dem Endgerät (UE) sendet, und
die Funknetzsteuerung (RNC) eine zweite Information zu dem Endgerät (UE) signalisiert, dass vor einer Bestätigung des erfolgten Wechsels von dem ersten Status (Cell_FACH) zu dem zweiten Status (Cell_DCH) durch das Endgerät (UE) die Mehrzahl Informationsblöcke (MIB,SIB) nicht vollständig gelesen werden muss.

3. Verfahren zur Steuerung eines Statuswechsels eines Endgerätes (UE) in einem Funk-Kommunikationssystem, bei dem
eine Funknetzsteuerung (RNC) des Funk-Kommunikationssystems in einem Kanal eine Mehrzahl Informationsblöcke (MIB, SIB) periodisch aussendet,
die Funknetzsteuerung (RNC) eine Nachricht bezüglich eines Wechsels des Endgerätes (UE) von einem ersten Status (Cell_FACH) zu einem zweiten Status (Cell_DCH) zu dem Endgerät (UE) sendet,
die Funknetzsteuerung (RNC) eine zweite Information zu dem Endgerät (UE) signalisiert, dass vor einer Bestätigung des erfolgten Wechsels von dem ersten Status (Cell_FACH) zu dem zweiten Status (Cell_DCH) durch das Endgerät (UE) die Mehrzahl Informationsblöcke (MIB,SIB) nicht vollständig gelesen werden muss, und
das Endgerät (UE) bei Bestätigung des erfolgten Wechsels von dem ersten Status (Cell_FACH) zu dem zweiten Status (Cell_DCH) mittels einer ersten Information der Funknetzsteuerung (RNC) signalisiert, dass die Mehrzahl Informationsblöcke (MIB,SIB) nicht vollständig gelesen wurde.

4. Verfahren nach einem vorstehenden Anspruch, bei dem
die erste und/oder zweite Information in Form eines Statusanzeigers oder eines Bitmaps übertragen wird.

5. Verfahren nach einem vorstehenden Anspruch, bei dem
die erste und/oder zweite Information als ein Systeminformationsblock (SIB) oder als ein Informationselement eines Systeminformationsblocks (SIB), als ein Master-Informationsblock (MIB), als eine Rekonfigurationsnachricht (Physical Channel Reconfiguration) und/oder als eine Rekonfigurationsbestätigungsnachricht (Physical Channel Reconfiguration Complete) übertragen wird.

6. Verfahren nach Anspruch 2 oder 3, bei dem
die zweite Information in einem Rundsendekanal einer Basisstation (NB1) des Funk-Kommunikationssystems übertragen wird.

7. Verfahren nach einem vorstehenden Anspruch, bei dem
die Mehrzahl Informationsblöcke (MIB,SIB) in einem Rundsendekanal übertragen wird.

8. Verfahren nach Anspruch 1 oder 3, bei dem
das Endgerät (UE) mittels der ersten Information der Funknetzsteuerung (RNC) signalisiert, welchen zumindest einen der Mehrzahl Informationsblöcke (SIB,MIB) und/oder Erweiterungen des zumindest einen Informationsblocks von dem Endgerät (UE) gelesen wurde bzw. gelesen wird oder nicht gelesen wurde bzw. gelesen wird.

9. Endgerät (UE), aufweisend zumindest
eine Sende-/Empfangseinrichtung (SEE) zum Empfangen einer in einem Kanal von einer Funknetzsteuerung (RNC) eines Funk-Kommunikationssystems periodisch ausgesendeten Mehrzahl von Informationsblöcken (MIB,SIB) und zum Empfangen einer Nachricht zur Steuerung eines Wechsels von einem ersten Status (Cell_FACH) zu einem zweiten Status (Cell_DCH), und
eine Steuereinrichtung (ST) zum Steuern einer Signalisierung des nicht vollständigen Lesens der Mehrzahl Informationsblöcke (MIB,SIB) mittels einer ersten Information
bei einem Senden einer Bestätigung des erfolgten Wechsels von dem ersten Status (Cell_FACH) zu dem zweiten Status (Cell_DCH) zu der Funknetzsteuerung (RNC) durch die Sende-/Empfangseinrichtung (SEE).

10. Endgerät (UE) nach Anspruch 11, wobei
die Steuereinrichtung (ST) ausgestaltet ist zum Steuern des Wechsels von dem ersten (Cell_FACH) zu dem zweiten Status (Cell_DCH).

11. Funknetzsteuerung (RNC) eines Funk-Kommunikationssystems, aufweisend zumindest
eine Sende-/Empfangseinrichtung (SEE) zum periodischen Aussenden einer Mehrzahl Informationsblöcke (MIB,SIB) in einem Kanal, sowie zum Senden einer Nachricht zu einem Endgerät (UE) zum Steuern eines Wechsels des Endgerätes (UE) von einem ersten Status (Cell_FACH) zu einem zweiten Status (Cell_DCH), und
eine Steuereinrichtung (MIB,SIB) zum Steuern einer Signalisierung einer zweiten Information, nach der vor einer Bestätigung des erfolgten Wechsels von dem ersten Status (Cell_FACH) zu dem zweiten Status (Cell_DCH) durch das Endgerät (UE) die Mehrzahl Informationsblöcke (MIB,SIB) nicht vollständig gelesen werden muss, durch die Sende-/Empfangseinrichtung (SEE).

12. Funk-Kommunikationssystem, bestehend aus zumindest einer Funknetzsteuerung (RNC) sowie zumindest einem Endgerät (UE), wobei die Funknetzsteuerung (RNC) aufweist zumindest
eine Sende-/Empfangseinrichtung (SEE) zum periodischen Aussenden einer Mehrzahl Informationsblöcke (MIB,SIB) in einem Kanal, sowie zum Senden einer Nachricht zu einem Endgerät
(UE) zum Steuern eines Wechsels des Endgerätes (UE) von einem ersten Status (Cell_FACH) zu einem zweiten Status (Cell_DCH), und
eine Steuereinrichtung (MIB,SIB) zum Steuern einer Signalisierung einer zweiten Information, nach der vor einer Bestätigung des erfolgten Wechsels von dem ersten Status (Cell_FACH) zu dem zweiten Status (Cell_DCH) durch das Endgerät (UE) die Mehrzahl Informationsblöcke (MIB,SIB) nicht vollständig gelesen werden muss, durch die Sende-/Empfangseinrichtung (SEE),
und wobei das Endgerät (UE) aufweist zumindest
eine Sende-/Empfangseinrichtung (SEE) zum Empfangen der von der Funknetzsteuerung (RNC) periodisch ausgesendeten Mehrzahl Informationsblöcke (MIB, SIB) und der Nachricht zur Steuerung des Wechsels von dem ersten Status (Cell_FACH) zu dem zweiten Status (Cell_DCH), und
eine Steuereinrichtung (ST) zum Steuern des Wechsels von dem ersten Status (Cell_FACH) zu dem zweiten Status (Cell_DCH).

13. Funk-Kommunikationssystem, bestehend aus zumindest einer Funknetzsteuerung (RNC) sowie zumindest einem Endgerät (UE), wobei die Funknetzsteuerung (RNC) aufweist zumindest
eine Sende-/Empfangseinrichtung (SEE) zum periodischen Aussenden einer Mehrzahl Informationsblöcke (MIB,SIB) in einem Kanal, sowie zum Senden einer Nachricht zu einem Endgerät (UE) zum Steuern eines Wechsels des Endgerätes (UE) von einem ersten Status (Cell_FACH) zu einem zweiten Status (Cell_DCH), und
wobei das Endgerät (UE) aufweist zumindest
eine Sende-/Empfangseinrichtung (SEE) zum Empfangen der von der Funknetzsteuerung (RNC) periodisch ausgesendeten Mehrzahl Informationsblöcke (MIB,SIB) und der Nachricht zur Steuerung des Wechsels von dem ersten Status (Cell_FACH) zu dem zweiten Status (Cell_DCH), und
eine Steuereinrichtung (ST) zum Steuern einer Signalisierung des nicht vollständigen Lesens der Mehrzahl Informationsblöcke (MIB,SIB) mittels einer ersten Information bei einem Senden einer Bestätigung des erfolgten Wechsels von dem ersten Status (Cell_FACH) zu dem zweiten Status (Cell_DCH) zu der Funknetzsteuerung (RNC) durch die Sende-/Empfangseinrichtung (SEE).

14. Funk-Kommunikationssystem nach Anspruch 13, wobei die zumindest eine Funknetzsteuerung (RNC) eine Steuereinrichtung (ST) zum Steuern einer Verzögerung vor einem Senden einer weiteren Nachricht für einen Wechsel des Endgerätes (UE) von dem zweiten Status (Cell_DCH) zu dem ersten Status (Cell_FACH) aufweist.

15. Funk-Kommunikationssystem, bestehend aus zumindest einer Funknetzsteuerung (RNC) sowie zumindest einem Endgerät (UE), wobei die Funknetzsteuerung (RNC) aufweist zumindest
eine Sende-/Empfangseinrichtung (SEE) zum periodischen Aussenden einer Mehrzahl Informationsblöcke (MIB,SIB) in einem Kanal, sowie zum Senden einer Nachricht zu einem Endgerät (UE) zum Steuern eines Wechsels des Endgerätes (UE) von einem ersten Status (Cell_FACH) zu einem zweiten Status (Cell_DCH), und
eine Steuereinrichtung (MIB,SIB) zum Steuern einer Signalisierung einer zweiten Information, nach der vor einer Bestätigung des erfolgten Wechsels von dem ersten Status (Cell_FACH) zu dem zweiten Status (Cell_DCH) durch das Endgerät (UE) die Mehrzahl Informationsblöcke (MIB,SIB) nicht vollständig gelesen werden muss, durch die Sende-/Empfangseinrichtung (SEE),
und wobei das Endgerät (UE) aufweist zumindest
eine Sende-/Empfangseinrichtung (SEE) zum Empfangen der von der Funknetzsteuerung (RNC) periodisch ausgesendeten Mehrzahl Informationsblöcke (MIB,SIB) und der Nachricht zur Steuerung des Wechsels von dem ersten Status (Cell_FACH) zu dem zweiten Status (Cell_DCH), und
eine Steuereinrichtung (ST) zum Steuern einer Signalisierung des nicht vollständigen Lesens der Mehrzahl Informationsblöcke (MIB,SIB) mittels einer ersten Information bei einem Senden einer Bestätigung des erfolgten Wechsels von dem ersten Status (Cell_FACH) zu dem zweiten Status (Cell_DCH) zu der Funknetzsteuerung (RNC) durch die Sende-/Empfangseinrichtung (SEE).
